# EUROPÄISCHE PATENTSCHRIFT

(11) **EP 3 621 842 B1**
(45) Veröffentlichungstag und Bekanntmachung des Hinweises auf die Patenterteilung: **18.05.2022**
(21) Anmeldenummer: 18726372.8
(22) Anmeldetag: 11.05.2018
(51) Int. Cl.: B60K 35/00, B60K 37/02

(54) **FAHRZEUG**
VEHICLE
VOITURE

(30) Priorität: 12.05.2017 DE 102017110407
(43) Veröffentlichungstag der Anmeldung: 18.03.2020
(73) Patentinhaber: Bissantz, Nicolas, 90491 Nürnberg (DE)
(72) Erfinder: Bissantz, Nicolas, 90491 Nürnberg (DE)
(74) Vertreter: Herrmann, Uwe
(86) Internationale Anmeldenummer: PCT/EP2018/062239
(87) Internationale Veröffentlichungsnummer: WO 2018/206780

(56) Entgegenhaltungen:
- EP-A1- 2 305 507
- DE-A1-102010 011 088
- US-A1- 2015 109 756
- US-B1- 6 906 634

## Beschreibung

Die Erfindung betrifft ein Fahrzeug, insbesondere ein Kraftfahrzeug, vorzugsweise einen PKW, mit Wiedergabemitteln zur Anzeige wenigstens eines aktuellen Parameters, wie beispielsweise der Geschwindigkeit des Fahrzeuges.

Die US 2015 / 109 756 A1 offenbart eine Vorrichtung und ein Verfahren zur Anzeige eines Clusters. Die Vorrichtung umfasst einen Fahrsensor, der einen Fahrzustand eines mobilen Objekts erfasst, und eine Anzeigeeinheit, die ein Verfahren zur Anzeige eines Clusters umsetzt, das sich in dem mobilen Objekt befindet. Ein Controller ist so konfiguriert, dass er eine Skala und einen Zeiger beleuchtet, der die Skala auf der Grundlage des erfassten Fahrzustands des mobilen Objekts anzeigt. Darüber hinaus erfasst der Controller einen aktuellen Fahrzustand des mobilen Objekts in Echtzeit, um ein Steuersignal in Bezug auf das Anzeigeverfahren zu erzeugen, das einen Helligkeitsgrad, einen Helligkeitsbereich und eine Farbe der Skala umfasst.

Die US 6,906,634 B1 offenbart eine Anzeigeeinheit auf, die eine Skala mit grafischen Informationen und ein Anzeigeelement umfasst, das in Abhängigkeit von mindestens einem Eingabeparameter auf eine Position der Skala ausgerichtet werden kann. Um insbesondere bei kleinen Anzeigegeräten eine bessere Ablesbarkeit zu gewährleisten, wird die Darstellung der grafischen Information in einem Bereich um die momentane Position des Anzeigeelements im Vergleich zu einer normalen Anzeige verändert.

Die DE 10 2010 011 088 A1 zeigt ein Verfahren zum Anzeigen von Informationen in einem Kraftfahrzeug, bei dem der Ist-Wert eines vom Betrieb des Kraftfahrzeugs abhängigen Parameters aufeinander folgend erfasst wird, ein Basiswert für diesen Parameter gespeichert ist und eine Anzeige eines graphischen Symbols in dem Kraftfahrzeug gestartet wird, wenn der Ist-Wert des Parameters den Basiswert unter- oder überschreitet, wobei sich das graphische Symbol in Abhängigkeit von den erfassten Abweichungen des Ist-Werts des Parameters vom Basiswert vergrößert. Des Weiteren betrifft die Erfindung eine Vorrichtung zum Durchführen des Verfahrens bzw. ein Kraftfahrzeug mit einer solchen Vorrichtung.

Die EP 2 305 507 A1 offenbart ein Verfahren zum Betreiben einer Fahrzeug-Benutzerschnittstelle, wobei die Benutzerschnittstelle eine im Fahrzeug angebrachte Touchscreen-Anzeige verwendet. In einem Aspekt ändern sich die visuellen oder visuellen/interaktiven Eigenschaften der Schnittstelle, nachdem der Benutzer die Schnittstelleninteraktion eingeleitet hat. Ein weiterer Aspekt ist, dass die Schnittstelle es dem Benutzer ermöglicht, eine beliebige Vielzahl von verschiedenen Steuerungsinteraktionstechniken zu verwenden, um dieselbe Funktion zu erreichen.

Aus dem Stand der Technik bekannte Fahrzeuge, die Tachometer zur Anzeige der aktuellen Fahrzeuggeschwindigkeit umfassen, weisen analoge und/oder digitale Wiedergabemittel auf, auf denen die Fahrzeuggeschwindigkeit mit Zahlen oder Zahlenwörtern mittels Zeigern, Ziffernblättern, Displays und/oder sonstiger Anzeigemitteln angezeigt werden.

Hierbei werden Geschwindigkeitswerte häufig als Zahlen angezeigt, die für den Betrachter unterschiedlich relevant sein können. Für den Betrachter sind beispielsweise zulässige Höchstgeschwindigkeiten oder allgemein hohe Geschwindigkeiten von besonderem Interesse, während andere Geschwindigkeiten von nachrangiger Bedeutung sein können.

Nachteilig ist in diesem Zusammenhang, dass die angezeigten, die aktuelle Geschwindigkeit anzeigende Zahlen üblicherweise in einem einheitlichen Format beispielsweise auf einem Zifferblatt oder Display wiedergegeben werden, wobei das Format beziehungsweise Erscheinungsbild der Zahlen einheitlich und unabhängig von den jeweiligen Zahlenwerten ist. Dadurch kann es einem Betrachter schwer fallen, die für ihn relevantesten Zahlen schnell und einfach zu erfassen bzw. zu bemerken.

Vor diesem Hintergrund ist es Aufgabe der Erfindung, ein verbessertes Fahrzeug bereitzustellen, das es einem Fahrer einfacher ermöglicht, die für ihn relevantesten Geschwindigkeiten oder sonstige Parameter zügig zu erfassen.

Diese Aufgabe wird erfindungsgemäß durch ein Fahrzeug mit den Merkmalen des Anspruchs 1 gelöst. Vorteilhafte Ausgestaltungen sind Gegenstand der Unteransprüche.

Demnach ist ein Fahrzeug, insbesondere ein Kraftfahrzeug und vorzugsweise ein PKW, mit Wiedergabemitteln zur Anzeige eines oder mehrerer aktueller Parameter des Fahrzeuges vorgesehen, wobei die Wiedergabemittel ausgebildet sind, den aktuellen Parameterwert in Form von Zahlen oder Zahlwörtern auf den Wiedergabemitteln darzustellen. Des Weiteren sind Zuordnungsmittel vorgesehen, die ausgebildet sind, der Zahl bzw. dem Zahlwort auf der Grundlage des Wertes der Zahl oder des Zahlworts die Größe der Zahl oder des Zahlwortes und/oder vorzugsweise wenigstens einen die Farbe betreffenden Parameter der Zahl oder des Zahlwortes und/oder von deren Hintergrund zuzuordnen.

Die Zuordnung kann dabei wenigstens teilweise in der Art geschehen, dass ähnliche bzw. benachbarte Geschwindigkeitswerte oder sonstige Parameterwerte mit ähnlichem Layout dargestellt werden.

Ferner sind erfindungsgemäß die Wiedergabemittel dazu ausgebildet, die Zahl oder das Zahlwort mit der zugeordneten Größe und/oder vorzugsweise dem Farbparameter auf den Wiedergabemitteln darzustellen.

Die Größe der Zahl und des Zahlworts kann vorliegend der Schriftgröße entsprechen, welche insbesondere automatisch angezeigt wird.

Erfindungsgemäß wird vorteilhafterweise eine insbesondere automatisierte Darstellung von Zahlen oder Zahlwörtern realisiert, die einer aktuellen Geschwindigkeit oder einem sonstigen aktuellen Parameter des Fahrzeugs entspricht. Damit wird ein einfaches und klares Erkennen bzw. Hervorheben von besonders relevanten Geschwindigkeiten / Parameterwerten für einen Fahrer des Fahrzeugs ermöglicht.

Dabei ist es möglich, bei Erreichen bestimmter Parameterwerte, insbesondere Geschwindigkeiten, wie beispielsweise bei Überschreiten einer geltenden Höchstgeschwindigkeit die Zahl oder das Zahlwort besonders auffällig wiederzugeben. Denkbar ist auch, dass die Zahl oder das Zahlwort nicht nur hinsichtlich Farbe, Größe und Hintergrund verändert wird, sondern dass zur Steigerung der Sichtbarkeit der Zahl oder des Zahlworts diese blinkend wiedergegeben werden.

Bei der Zuordnung der Farbparameter und/oder der Größe zu der wiedergegebenen Zahl oder zu dem wiedergegebenen Zahlenwort kann erfindungsgemäß der Wert bzw. Betrag des aktuellen Parameterwertes berücksichtigt werden, wobei die Größe der Zahl oder des Zahlenworts mit der Größe des Parameterwertes wächst. Die Relation kann direkt proportional sein, jedoch sind auch andere Abhängigkeiten denkbar und von der Erfindung umfasst.

In einer bevorzugten Ausführung ist denkbar, dass Erfassungsmittel vorgesehen sind, die ausgebildet sind, wenigstens einen Zustandsparameter des Fahrzeugs zu erfassen, wobei die Zuordnungsmittel dazu eingerichtet sind, die Größe und/oder den Farbparameter auf der Grundlage des Zustandsparameters zuzuordnen. Unter dem Begriff "Farbparameter" ist jede beliebige Eigenschaft einer Farbe zu verstehen, wie die Art der Farbe (rot, blau, grün etc.), die Farbtiefe, die Helligkeit, der Kontrast etc.

Wenn mehr als ein Zustandsparameter erfasst wird, so kann die Zahl bzw. das Zahlwort entsprechend auf Grundlage von mehr als einem Zustandsparameter hinsichtlich des Farbtons und der Größe variiert werden.

Die Erfassungsmittei können beispielsweise optische Sensoren und/oder sonstige Sensorvorrichtungen umfassen, mittels derer den Zuordnungsmitteln Zustandsparameter des Fahrzeugs bzw. das Fahrzeug und/oder dessen Umgebung betreffende Zustandsparameter bereitgestellt werden können.

In einer weiteren bevorzugten Ausführung ist denkbar, dass der Zustandsparameter die Umgebungshelligkeit des Fahrzeugs ist. In Abhängigkeit von der im Bereich des Fahrzeugs festgestellten Helligkeit kann so die Größe und/oder die Helligkeit der Zahl oder Zahlwortes vergrößert oder verkleinert werden.

Wird beispielsweise festgestellt, dass es in der Umgebung des Fahrzeugs relativ dunkel ist, weil das Fahrzeug beispielsweise durch einen Tunnel oder nachts fährt, so können die Zuordnungsmittel der Zahl oder dem Zahlwort entsprechend dunklere Farben zuordnen, um den Fahrer nicht durch zu helles Licht zu blenden.

In einer weiteren bevorzugten Ausführung ist denkbar, dass der Zustandsparameter auf die Witterungsverhältnisse bezogen ist. Dabei können die Erfassungsmittel beispielsweise dazu eingerichtet sein, die Außentemperatur und/oder die Windbedingungen und/oder Niederschläge und/oder die Sichtweite zu erfassen, um z.B. in Abhängigkeit davon bei Überschreiten einer bestimmten Geschwindigkeit die Zahl oder das Zahlwort beispielsweise in einem Warnfarbton anzuzeigen.

Bei dieser bestimmten Geschwindigkeit kann es sich beispielsweise um eine durch eine zulässige Höchstgeschwindigkeit handeln oder auch um ein anderes Limit, das beispielweise durch die Bereifung vorgegeben ist.

An dieser Stelle wird darauf hingewiesen, dass die vorliegende Erfindung nicht auf die Fahrzeuggeschwindigkeit als Parameter beschränkt ist. Alternativ oder zusätzlich sind auch andere Parameter, wie z.B. der Ladezustand der Batterie oder eines Akkus, Temperatur, Reifendruck etc. als Parameter denkbar und von der Erfindung umfasst.

In einer weiteren bevorzugten Ausführung ist somit denkbar, dass der Zustandsparameter die Ausrüstung des Fahrzeugs, wie insbesondere die Art der Fahrzeugreifen, betrifft. Stellen die Erfassungsmittel beispielsweise fest, dass Winterreifen an dem Fahrzeug montiert sind, so kann bei Überschreiten der für Winterreifen geltenden Höchstgeschwindigkeit die Größe und/oder der Farbparameter entsprechend anders zugeordnet werden.

Bei der so erfassten Ausrüstung des Fahrzeugs kann es sich alternativ oder zusätzlich um einen Fahrzeuganhänger, einen Dachgepäckträger und/oder einen Fahrradträger handeln, deren Vorhandensein am Fahrzeug mittels der Erfassungsmittel feststellbar ist.

Werden derartige Komponenten am Fahrzeug erfasst, so können die Zuordnungsmittel der Zahl oder dem Zahlenwort unter gleichzeitiger Berücksichtigung der aktuellen Geschwindigkeit entsprechend veränderte Farbparameter und/oder Größen zuordnen.

Allgemein kann das Erfassungsmittel auch Mittel zur manuellen Eingabe von Parametern umfassen, die der Fahrer entsprechend händisch eingeben kann. Dabei können auch gegebenenfalls zu berücksichtigende Grenzgeschwindigkeiten oder sonstige Grenzwerte manuell und beispielsweise nach Wünschen des Fahrers eingegeben werden.

In einer weiteren bevorzugten Ausführung ist denkbar, dass der Zustandsparameter im Bereich des Fahrzeugs geltende Geschwindigkeitsbegrenzungen und/oder befindliche Verkehrszeichen betrifft.

Hierzu können die Erfassungsmittel beispielsweis als Kamera ausgebildet sein, die insbesondere in Fahrtrichtung des Fahrzeugs ausgerichtet ist und mittels der Geschwindigkeitsbegrenzungen erfasst werden können, die auf Verkehrszeichen angezeigt werden können.

Alternativ oder zusätzlich können die Erfassungsmittel eine Kommunikationseinrichtung und/oder eine Navigationseinrichtung umfassen, mittels derer Informationen zu Geschwindigkeitsbegrenzungen an das Fahrzeug und insbesondere an die Zuordnungsmittel übertragbar sind.

In einer weiteren bevorzugten Ausführung ist denkbar, dass der Zustandsparameter im Bereich des Fahrzeugs vorhandene Verkehrsteilnehmer betrifft. Hierzu kann eine Sensorvorrichtung vorgesehen sein, mittels der das Vorhandensein und/oder die Entfernung und/oder die Geschwindigkeit von weiteren Verkehrsteilnehmern erfasst werden und an die Zuordnungsmittel übertragen werden können.

Wird dabei festgestellt, dass sich andere Verkehrsteilnehmer in zu geringen Abstand von dem Fahrzeug befinden, so können die Zuordnungsmittel den Farbparameter und/oder die Größe der Zahl oder des Zahlwortes entsprechend anders zuordnen. Beispielsweise kann bei zu geringen Abständen zwischen den Verkehrsteilnehmern die aktuelle Geschwindigkeit in einem Warnfarbton und/oder blinkend angezeigt werden, um dadurch eine Vergrößerung des Sicherheitsabstandes nahezulegen.

Die vorstehenden sowie die folgenden Ausführungen gelten für andere Parameter als die Geschwindigkeit entsprechend.

In einer weiteren bevorzugten Ausführung ist denkbar, dass der Zustandsparameter die Fahrdauer des Fahrzeugs ist. Stellen die Erfassungsmittel beispielweise fest, dass das Fahrzeug über einen längeren Zeitraum ohne angemessene Pausen bewegt wurde, so kann bei Überschreiten einer bestimmten Grenzgeschwindigkeit durch Ändern bzw. Zuordnen entsprechender Farbparameter und/oder Größen der Zahlen oder Zahlenwörter eine entsprechende Anpassung der Fahrgeschwindigkeit nahegelegt werden.

in einer weiteren bevorzugten Ausführung ist denkbar, dass der Zustandsparameter die Blickrichtung des Fahrers des Fahrzeugs ist. Stellen die Erfassungsmittel fest, dass der Fahrer die angezeigte Geschwindigkeit nicht oder nicht hinreichend beachtet, so kann insbesondere in Fällen, in denen die aktuelle Geschwindigkeit über einem geltenden Grenzwert liegt, die Anzeige analog zur oben beschriebenen Art und Weise modifiziert werden.

In einer weiteren bevorzugten Ausführung ist denkbar, dass der Zustandsparameter der Ladezustand einer Batterie des Fahrzeugs ist. Insbesondere bei einem Elektrofahrzeug kann dem Fahrer durch entsprechendes Anzeigen einer niedrigeren oder niedriger werdenden Höchstgeschwindigkeit bei sich leerenden Fahrzeugbatterien mitgeteilt werden, dass ökonomischeres langsameres Fahren positiv auf die Reichweite seines Fahrzeugs wirkt.

Vorzugsweise sind die Wiedergabemittel ausgebildet, um die Größe und/oder die Farbtiefe der Zahl oder des Zahlwortes umso größer oder kleiner zu wählen, je größer der Wert der Zahl bzw. des Zahlwortes ist. Handelt es sich bei dem Parameter z.B. um dem Abstand zu einem vorausfahrenden Fahrzeug, kann die Größe der Zahl, die den Abstand wiedergibt, umso kleiner gewählt werden, je größer der Abstand ist. Handelt es sich bei dem Parameter um die Fahrzeuggeschwindikgeit, so kann die Größe der Zahl, die die Geschwindigkeit wiedergibt, umso größer gewählt werden, je größer die Fahrzeuggeschwindigkeit ist.

Weiterhin ist es denkbar, dass die Wiedergabemittel ausgebildet, die Größe und/oder wenigstens einen Farbparameter der Zahl oder des Zahlwortes zu ändern, wenn die Geschwindigkeit des Fahrzeuges oder ein sonstiger Parameter einen Grenzwert erreicht oder übersteigt.

Die vorliegende Erfindung betrifft des Weiteren ein Verfahren zur Wiedergabe wenigstens eines aktuellen Parameters, vorzugsweise der aktuellen Geschwindigkeit eines Fahrzeuges gemäß dem kennzeichnenden Teils eines der vorhergehenden Ansprüche. Sämtliche in Bezug auf das Fahrzeug beschriebenen Merkmale, sind erfindungsgemäß auch Bestandteil des beanspruchten Verfahrens.

Weitere Einzelheiten und Vorteile sind anhand der in den Figuren beispielhaft gezeigten Ausführung erläutert. Dabei zeigen:
- Figur 1:: einen Teil eines Armaturenbereichs eines erfindungsgemäßen Fahrzeuges in einem ersten Geschwindigkeitsbereich;
- Figur 2:: einen Teil eines Armaturenbereichs eines erfindungsgemäßen Fahrzeuges in einem Grenzbereich des ersten Geschwindigkeitsbereichs; und
- Figur 3:: einen Teil eines Armaturenbereichs eines erfindungsgemäßen Fahrzeuges in einem zweiten Geschwindigkeitsbereich.

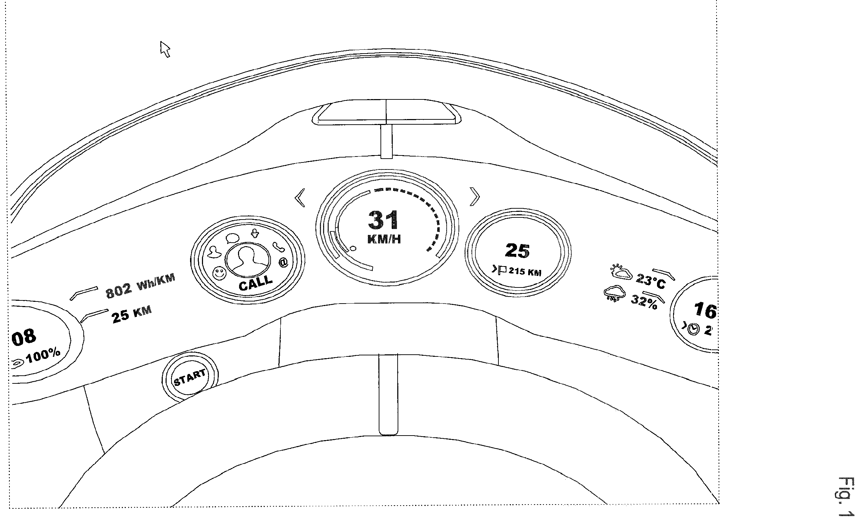

Die Figuren 1- 3 zeigen einen Teil eines Armaturenbereichs eines erfindungsgemäßen Fahrzeuges bei unterschiedlichen Geschwindigkeiten. Die Wiedergabemittel sind als eine digitale Anzeige ausgebildet, die Teil eines Touchscreens sein kann. Die Wiedergabemittel bzw. der Tachometer sind jeweils mittig in den Figuren zu erkennen.

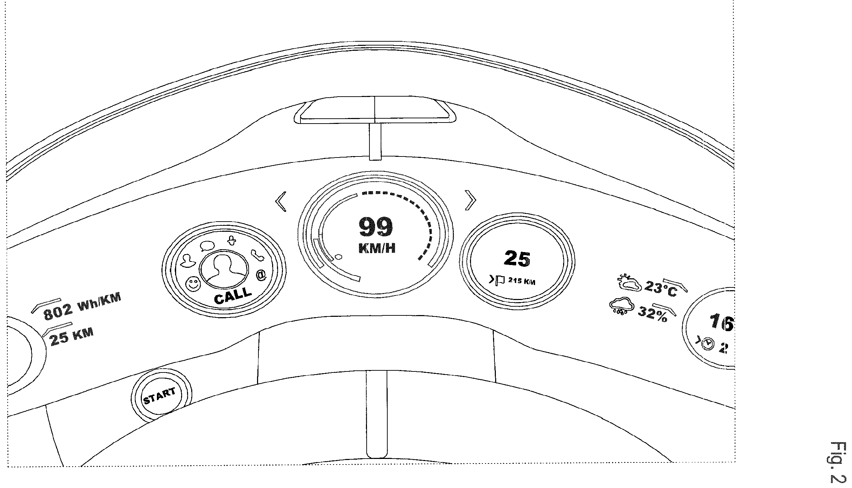

Die Figuren 1 und 2 zeigen das Fahrzeug bei Geschwindigkeiten unter einer beispielhaften Grenzgeschwindigkeit von 100km/h, wobei die in Figur 1 gezeigte niedrigere Geschwindigkeit in einem helleren Blau und kleiner angezeigt wird, als die höhere Geschwindigkeit, welche in Figur 2 gezeigt ist.

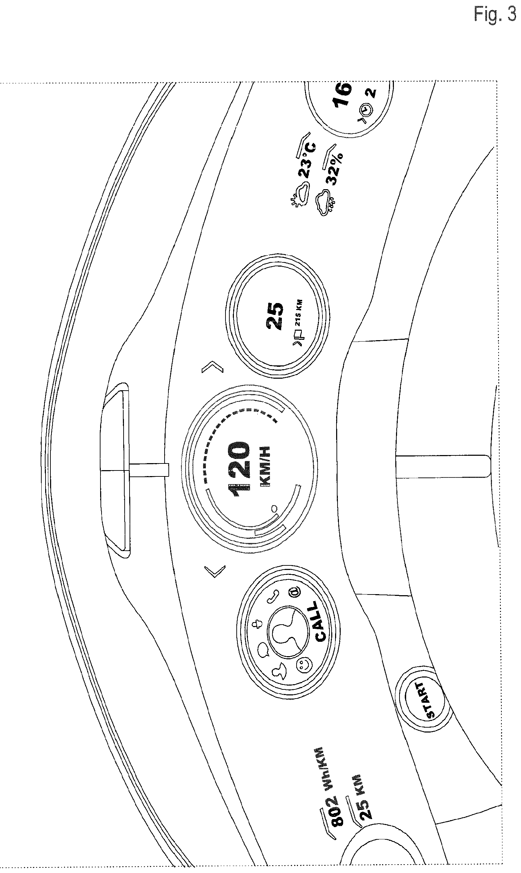

Bei Überschreiten der beispielhaften Grenzgeschwindigkeit wirf die aktuelle, zu hohe Geschwindigkeit in einem anderen Farbton, einer anderen Graustufe und/oder in einer anderen, insbesondere größeren Größe angezeigt, wie dies in Figur 3 angedeutet ist. Dieser Wechsel der Anzeige kann dabei sprungartig sein, d.h. eintreten, wenn ein Grenzwert überschritten wird etc.

Denkbar ist alternativ oder zusätzlich, dass die Farbe des Hintergrunds der Zahl oder des Zahlworts in einem anderen Farbton angezeigt wird. Auch der Farbton des Hintergrundes kann in Abhängigkeit von dem Wert der dargestellten Zahl variieren.

Bei der Geschwindigkeit, bei welcher ein Farbwechsel initiiert wird, kann es sich beispielsweise um eine von Erfassungsmitteln erfasste und im Bereich des Fahrzeugs geltende Höchstgeschwindigkeit handeln.

Bei anderen, weniger relevanten Veränderungen der Geschwindigkeit kann dagegen die Farbe beibehalten und lediglich der Farbton und/oder die Farbintensität und/oder die Helligkeit der Farbe, insbesondere kontinuierlich und/oder entsprechend der Veränderung der Geschwindigkeit des Fahrzeugs verändert werden.

Für die Zuordnung der Farbe und/oder Größe der Zahl sowie beispielsweise für eine mögliche blinkende Darstellung der Zahl oder des Zahlworts können beliebige der weiter oben genannten Zustandsparameter herangezogen werden.

Die Erfassungsmittel können beliebige an dem Fahrzeug bereits vorhandene Komponenten, wie z.B. einen Abstandssensor oder einen Helligkeitssensor umfassen.

## Patentansprüche

1. Fahrzeug mit Wiedergabemitteln zur Anzeige wenigstens eines Parameters des Fahrzeuges, **wobei** die Wiedergabemittel ausgebildet sind, den aktuellen Parameterwert in Form von Zahlen oder Zahlwörtern auf den Wiedergabemitteln darzustellen, wobei Zuordnungsmittel vorgesehen sind, die ausgebildet sind, der Zahl oder dem Zahlwort auf der Grundlage des Wertes der Zahl oder des Zahlworts die Größe der Zahl oder des Zahlwortes zuzuordnen und wobei die Wiedergabemittel ausgebildet sind, die Zahl oder das Zahlwort mit der zugeordneten Größe auf den Wiedergabemitteln darzustellen, **dadurch gekennzeichnet, dass** das Zuordnungsmittel ausgebildet ist, bei der Zuordnung der Größe der Zahl oder des Zahlenwortes den Wert bzw. Betrag des aktuellen Parameterwertes zu berücksichtigen, wobei die Größe der Zahl oder des Zahlenwortes mit der Größe des Parameters wächst.

2. Fahrzeug nach Anspruch 1, **dadurch gekennzeichnet, dass** die Zuordnungsmittel ausgebildet sind, der Zahl oder dem Zahlwort wenigstens einen die Farbe betreffenden Parameter der Zahl oder des Zahlwortes zuzuordnen und die Wiedergabemittel ausgebildet sind, die Zahl oder das Zahlwort mit dem zugeordneten Farbparameter auf den Wiedergabemitteln darzustellen.

3. Fahrzeug nach Anspruch 1, **dadurch gekennzeichnet, dass** es sich bei den Wiedergabemitteln um die Anzeigeeinrichtung eines Tachos handelt und dass es sich bei dem Parameter um die Fahrzeuggeschwindigkeit handelt.

4. Fahrzeug nach Anspruch 1 oder 2, **dadurch gekennzeichnet, dass** Erfassungsmittel vorgesehen sind, die ausgebildet sind, wenigstens einen Zustandsparameter des Fahrzeugs oder von dessen Umgebung zu erfassen, wobei die Zuordnungsmittel dazu eingerichtet sind, die Größe und/oder den Farbparameter auf der Grundlage des Zustandsparameters zuzuordnen.

5. Fahrzeug nach Anspruch 3, **dadurch gekennzeichnet, dass** der Zustandsparameter die Umgebungshelligkeit des Fahrzeugs ist.

6. Fahrzeug nach Anspruch 3 oder 4, **dadurch gekennzeichnet, dass** der Zustandsparameter auf die Witterungsverhältnisse bezogen ist, denen das Fahrzeug ausgesetzt ist.

7. Fahrzeug nach einem der Ansprüche 3 bis 5, **dadurch gekennzeichnet, dass** der Zustandsparameter die Ausrüstung des Fahrzeugs, wie insbesondere die Art der Fahrzeugreifen, betrifft.

8. Fahrzeug nach einem der Ansprüche 3 bis 6, **dadurch gekennzeichnet, dass** der Zustandsparameter im Bereich des Fahrzeugs geltende Geschwindigkeitsbegrenzungen und/oder befindliche Verkehrszeichen betrifft.

9. Fahrzeug nach einem der Ansprüche 3 bis 7, **dadurch gekennzeichnet, dass** der Zustandsparameter im Bereich des Fahrzeugs vorhandene Verkehrsteilnehmer betrifft.

10. Fahrzeug nach einem der Ansprüche 3 bis 8, **dadurch gekennzeichnet, dass** der Zustandsparameter die Fahrdauer des Fahrzeugs ist

11. Fahrzeug nach einem der Ansprüche 3 bis 9, **dadurch gekennzeichnet, dass** der Zustandsparameter die Blickrichtung des Fahrers des Fahrzeugs ist.

12. Fahrzeug nach einem der Ansprüche 3 bis 10, **dadurch gekennzeichnet, dass** der Zustandsparameter der Ladezustand einer Batterie des Fahrzeugs ist.

13. Fahrzeug nach einem der vorhergehenden Ansprüche, **dadurch gekennzeichnet, dass** die Wiedergabemittel ausgebildet, die Größe und/oder wenigstens einen Farbparameter der Zahl oder des Zahlwortes zu ändern, wenn der Parameterwert des Fahrzeuges einen Grenzwert erreicht oder übersteigt.

14. Verfahren zur Wiedergabe eines Parameters eines Fahrzeuges gemäß eines der vorhergehenden Ansprüche.

## Claims

1. Vehicle having reproduction means for displaying at least one parameter of the vehicle, **wherein** the reproduction means are configured to represent the current parameter value on the reproduction means in the form of numbers or numerical words, wherein there are provided allocation means which are configured to allocate to the number or numerical word, on the basis of the value of the number or numerical word, the size of the number or numerical word and wherein the reproduction means are configured to represent the number or numerical word on the reproduction means with the allocated size on the reproduction means, **characterized in that** the allocation means is configured to take into consideration the value or amount of the current parameter when allocating the size of the number or numerical word, wherein the size of the number or the numerical word increases with the size of the parameter.

2. Vehicle according to claim 1, **characterized in that** the allocation means are configured to allocate to the number of numerical word at least one parameter of the number or numerical word relating to the color, and the reproduction means are configured to represent the number or numerical word on the reproduction means with the allocated color parameter.

3. Vehicle according to claim 1, **characterized in that** the reproduction means are the display device of a tachometer, and **in that** the parameter is the vehicle speed.

4. Vehicle according to claim 1 or 2, **characterized in that** detection means are provided which are configured to detect at least one state parameter of the vehicle or of the surroundings thereof, wherein the allocation means are adapted to allocate the size and/or the color parameter on the basis of the state parameter.

5. Vehicle according to claim 3, **characterized in that** the state parameter is the ambient brightness of the vehicle.

6. Vehicle according to claim 3 or 4, **characterized in that** the state parameter is related to the weather conditions to which the vehicle is exposed.

7. Vehicle according to any one of claims 3 to 5, **characterized in that** the state parameter relates to the equipment with which the vehicle is fitted, such as in particular the type of vehicle tires.

8. Vehicle according to any one of claims 3 to 6, **characterized in that** the state parameter relates to speed limits that apply and/or traffic signs that are located in the region of the vehicle.

9. Vehicle according to any one of claims 3 to 7, **characterized in that** the state parameter relates to road users that are present in the region of the vehicle.

10. Vehicle according to any one of claims 3 to 8, **characterized in that** the state parameter is the time for which the vehicle has been travelling.

11. Vehicle according to any one of claims 3 to 9, **characterized in that** the state parameter is the direction in which the driver of the vehicle is looking.

12. Vehicle according to any one of claims 3 to 10, **characterized in that** the state parameter is the state of charge of a battery of the vehicle.

13. Vehicle according to any one of the preceding claims, **characterized in that** the reproduction means are configured to change the size and/or at least one color parameter of the number or numerical word when the parameter value of the vehicle reaches or exceeds a limit value.

14. Method for reproducing a parameter of a vehicle according to any one of the preceding claims.

## Revendications

1. Véhicule avec des moyens de restitution pour l'affichage d'au moins un paramètre du véhicule, **dans** lequel les moyens de restitution sont réalisés pour représenter la valeur de paramètre instantanée sous la forme de nombres ou de noms de nombres sur les moyens de restitution, dans lequel sont prévus des moyens d'association, qui sont réalisés pour associer la grandeur du nombre ou du nom de nombre au nombre ou au nom de nombre sur la base de la valeur du nombre ou du nom de nombre et dans lequel les moyens de restitution sont réalisés pour représenter le nombre ou le nom de nombre avec la grandeur associée sur les moyens de restitution, **caractérisé en ce que** le moyen d'association est réalisé pour prendre en compte, lors de l'association de la grandeur du nombre ou du nom de nombre, la valeur de la valeur de paramètre instantanée, dans lequel la grandeur du nombre ou du nom de nombre augmente avec la grandeur du paramètre.

2. Véhicule selon la revendication 1, **caractérisé en ce que** les moyens d'association sont réalisés pour associer au moins un paramètre, concernant la couleur, du nombre ou du nom de nombre au nombre ou au nom de nombre, et les moyens de restitution sont réalisés pour représenter le nombre ou le nom de nombre avec le paramètre de couleur associé sur les moyens de restitution.

3. Véhicule selon la revendication 1, **caractérisé en ce que** les moyens de restitution sont le système d'affichage d'un compteur, et que le paramètre est la vitesse de véhicule.

4. Véhicule selon la revendication 1 ou 2, **caractérisé en ce que** sont prévus des moyens de détection qui sont réalisés pour détecter au moins un paramètre d'état du véhicule et de son environnement, dans lequel les moyens d'association sont mis au point pour associer la grandeur et/ou le paramètre de couleur sur la base du paramètre d'état.

5. Véhicule selon la revendication 3, **caractérisé en ce que** le paramètre d'état est la clarté d'environnement du véhicule.

6. Véhicule selon la revendication 3 ou 4, **caractérisé en ce que** le paramètre d'état se rapporte aux conditions météorologiques, auxquelles le véhicule est exposé.

7. Véhicule selon l'une quelconque des revendications 3 à 5, **caractérisé en ce que** le paramètre d'état concerne l'équipement du véhicule, comme en particulier le type des pneumatiques du véhicule.

8. Véhicule selon l'une quelconque des revendications 3 à 6, **caractérisé en ce que** le paramètre d'état concerne des limitations de vitesse applicables dans la zone du véhicule et/ou des panneaux de signalisation se trouvant dans celle-ci.

9. Véhicule selon l'une quelconque des revendications 3 à 7, **caractérisé en ce que** le paramètre d'état concerne des usagers de la route présents dans la zone du véhicule.

10. Véhicule selon l'une quelconque des revendications 3 à 8, **caractérisé en ce que** le paramètre d'état est la durée de déplacement du véhicule.

11. Véhicule selon l'une quelconque des revendications 3 à 9, **caractérisé en ce que** la paramètre d'état est le sens du regard du conducteur du véhicule.

12. Véhicule selon l'une quelconque des revendications 3 à 10, **caractérisé en ce que** le paramètre d'état est l'état de charge d'une batterie du véhicule.

13. Véhicule selon l'une quelconque des revendications précédentes, **caractérisé en ce que** les moyens de restitution sont réalisés pour modifier la grandeur et/ou au moins un paramètre de couleur du nombre ou du nom de nombre quand la valeur de paramètre du véhicule atteint une valeur limite ou la dépasse.

14. Procédé de restitution d'un paramètre d'un véhicule selon l'une quelconque des revendications précédentes.
